# EUROPEAN PATENT APPLICATION

(11) **EP 1 344 950 A1**
(43) Date of publication of application: **17.09.2003**
(21) Application number: 03075725.6
(22) Date of filing: 11.03.2003
(51) Int. Cl.: F16B 7/20, A47B 47/00, F16B 5/10, F16B 12/22, F16B 12/34

(54) **System of profiles for constructing cupboards**

(30) Priority: 11.03.2002 NL 1020152
(71) Applicant: Karma Design B.V., 4817 ZL Breda (NL)
(72) Inventor: Van Gelderen, Alfred William Ronald, 5107 NV Dongen (NL)
(74) Representative: Eveleens Maarse, Pieter

(57) **Abstract**

The present invention relates to a profile system for constructing cupboards, display cases and the like, comprising at least two main profiles (1) and at least one coupling profile (2) coupling the main profiles, wherein each main profile (1) is provided with at least one slot (3) with a substantially T-shaped cross-section, and wherein the coupling profile (2) is provided with two T-shaped ends (8) and a body (9) connecting the ends, wherein on each side of the body the mutually facing walls (11) of the T-shaped ends (8) of the coupling profile (2) enclose an angle with the body (9) of less than 90°.

## Description

The present invention relates to a system of profiles for constructing cupboards, display cases and the like, comprising at least two main profiles and at least one coupling profile coupling the main profiles, wherein each main profile is provided with at least one slot with a substantially T-shaped cross-section and wherein the coupling profile is provided with two T-shaped ends and a body connecting the ends.

Such a profile system is a generally known system for constructing cupboards and display cases. The main profiles herein form the frame parts of the cupboard or the display case. The main profiles are provided with one or more slots. A slot serves for fixing of all manner of components as well as for receiving a coupling profile coupling the main profiles.

The object of the present invention is to provide an improved profile system.

According to the present invention the profile system is characterized for this purpose in that on each side of the body the mutually facing walls of the T-shaped ends of the coupling profile enclose an angle with the body of less than 90°. The contact surface between the slots of the main profiles on the one hand and the mutually facing walls of the T-shaped ends of the coupling profiles on the other is hereby made smaller, whereby arranging of the coupling profiles in the slots of the main profiles is simplified.

The enclosed angle is preferably between 84-88° and in preference is roughly equal to 86°.

According to a further embodiment of the invention, the smallest dimension between the mutually facing walls of the T-shaped ends of the coupling profile is smaller than the dimension between the internal walls of the slots of two main profiles placed against each other. After assembly the main profiles connect almost seamlessly to each other.

In addition, a rib is preferably arranged on the body of the coupling profile, which rib co-acts with one of the walls of the entrance of the slot. A clamping action parallel to the contact surface will hereby also be obtained between the main profiles.

In the further embodiment the wall of each main profile in which the slot is situated is given a concave or inward inclining form. The main profiles will hereby connect closely together, without thereby forming seams.

The invention also relates to a main profile and a coupling profile for application in the profile system according to the invention. The main profile is preferably a tubular profile with a rectangular cross-section, while the coupling profile is preferably an elongate profile of H-shaped cross-section.

The invention will be further elucidated with reference to the annexed drawings. In the drawings:
Figure 1 shows a partial cross-section of the profile system according to the invention after assembly, and
Figure 2 shows a cross-section as according to figure 1 before assembly.

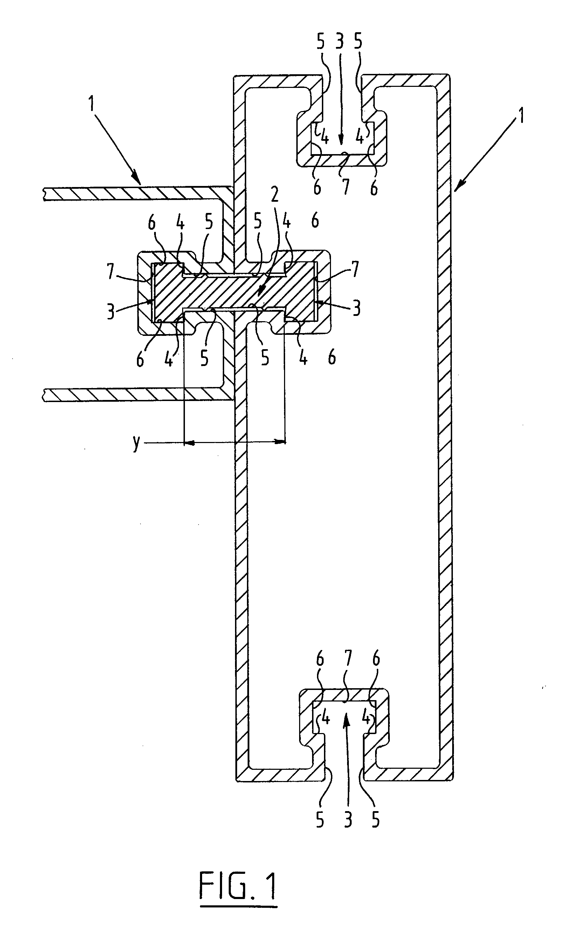

The profile system shown in the figures for constructing cupboards, display cases and the like consists of two main profiles 1 and a coupling profile 2 coupling the main profiles. Each main profile 1 is provided with one or more slots 3. Slots 3 can be arranged at random positions in one of the outer walls of main profile 1. Slots 3 have a substantially T-shaped cross-section. Reference numeral 4 designates internal walls of slots 3, while reference numeral 5 designates walls of the entrance of slot 3. Each slot further has side walls 6 and a bottom wall 7. The coupling profile is provided with two T-shaped ends 8 and a body 9 connecting the ends 8. Two ribs 10 are arranged on body 9 on each side thereof. Ribs 10 serve for co-action with walls 5 of the entrance to slot 3 (see figure 1).

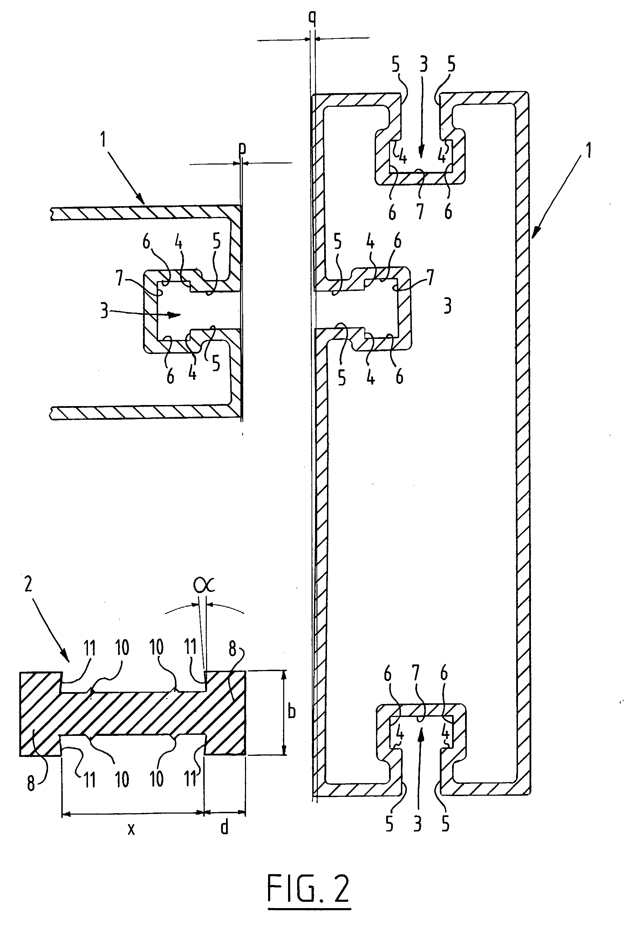

According to the invention, the mutually facing walls 11 of T-shaped ends 8 enclose on each side of body 9 of coupling profile 2 an angle α of less than 90° with that body (see figure 2). This angle α lies between 84-88° and in preference is roughly equal to 86°.

Although the shape of the T-shaped end of coupling profile 2 corresponds with the cross-sectional shape of the slot 3 of a main profile 1, the dimensions of these two are different. The dimension between side walls 6 of a slot 3 is greater than the width "b" of the T-shaped end 8 of coupling profile 2. The dimension between the internal wall 4 and the bottom wall 7 of T-shaped slot 3 is greater than thickness "d" of the T-shaped end 8 of coupling profile 2. The required clamping action which coupling profile 2 must bring about in order to mutually connect the two main profiles 1 is obtained because the smallest dimension "x" between the mutually facing walls 11 of T-shaped ends 8 of coupling profile 2 is smaller than the dimension "y" between internal walls 4 of slots 3 of two main profiles 1 placed against each other (see figure 1). In addition, the ribs 10, which co-act with walls 5 of each slot 3, bring about after assembly a clamping action parallel to the contact surface between the main profiles 1 placed against each other. Assembly is facilitated because there is only line contact between coupling profile 2 and main profiles 1. This is realized through angle α between the internal walls 4 of slots 3 and the mutually facing walls 11 of the ends of coupling profile 2.

Figure 2 finally indicates with "p" and "q" that the wall of each main profile 1 in which the slot 3 is situated takes a concave or inward inclining form. After coupling profile 2 has been pushed into the slots 3 of the main profiles 1 placed against each other and a clamping action is obtained whereby the two main profiles are pulled toward each other, an effect of main profiles 1 connecting closely onto each other will be obtained due to the walls being embodied in concave or inward inclining manner, wherein substantially no seams are formed.

Main profiles 1 are preferably tubular profiles with a rectangular cross-section. Slots 3 can be arranged in both the narrow and long sides of the rectangle. The main profiles 1 can be mutually coupled in different positions: with the end surfaces placed against each other or, as shown in the figures, with an end surface placed against a long side. Coupling profile 2 is preferably an elongate profile of H-shaped cross-section. Coupling profile 2 is then pushed into slots 3 from the side.

The invention is not limited to embodiments shown in the figures.

## Claims

1. Profile system for constructing cupboards, display cases and the like, comprising at least two main profiles and at least one coupling profile coupling the main profiles, wherein each main profile is provided with at least one slot with a substantially T-shaped cross-section and wherein the coupling profile is provided with two T-shaped ends and a body connecting the ends, **characterized in that** on each side of the body the mutually facing walls of the T-shaped ends of the coupling profile enclose an angle with the body of less than 90°.

2. Profile system as claimed in claim 1, **characterized in that** the enclosed angle lies between 84-88° and is preferably about 86°.

3. Profile system as claimed in claim 1 or 2, **characterized in that** the smallest dimension between the mutually facing walls of the T-shaped ends of the coupling profile is smaller than the dimension between the internal walls of the slots of two main profiles placed against each other.

4. Profile system as claimed in any of the claims 1-3, **characterized in that** a rib is arranged on the body of the coupling profile, which rib co-acts with one of the walls of the entrance of the slot.

5. Profile system as claimed in any of the claims 1-4, **characterized in that** the wall of each main profile in which the slot is situated is given a concave or inward inclining form.

6. Main profile for application in a profile system as claimed in any of the claims 1-5.

7. Main profile as claimed in claim 6, wherein the main profile is a tubular profile with a rectangular cross-section.

8. Coupling profile for application in a profile system as claimed in any of the claims 1-5.

9. Coupling profile as claimed in claim 8, wherein the coupling profile is an elongate profile of H-shaped cross-section.
